Europäisches Patentamt

(19) European Patent Office

Office européen des brevets

(11) Publication number: **0 256 892**
**A2**

## (12) EUROPEAN PATENT APPLICATION

(21) Application number: **87307348.0**

(22) Date of filing: **19.08.87**

(51) Int. Cl.⁴: **H 01 R 13/66**
**G 02 B 6/32**

(30) Priority: **20.08.86 GB 8620286**

(43) Date of publication of application:
**24.02.88 Bulletin 88/08**

(84) Designated Contracting States: **DE FR NL SE**

(71) Applicant: **PLESSEY OVERSEAS LIMITED**
**Vicarage Lane**
**Ilford Essex IGl 4AQ (GB)**

(72) Inventor: **Challans, John Clive**
**31 The Orchard**
**Kislingbury Northampton (GB)**

(74) Representative: **Elliott, Frank Edward**
**The Plessey Company plc. Intellectual Property**
**Department Vicarage Lane**
**Ilford, Essex IG1 4AQ (GB)**

(54) **Hybrid connector.**

(57) A hybrid connector 1 which is adapted to afford both electrical and optical or hydraulic or pneumatic connections comprises a pair of mutually engageable connector parts 2, 13 each of which comprises an outer shell 3, 14 into which is fitted a metal insert 6, 16 having a large central bore 24 adapted to receive a respective electrical moulding and contacts. Rings of non-electrical contacts 8, 9, 10; 18, 19, 20 are fitted into bores 7, 17 in the inserts 6, 16 and are segregated from the electrical contacts by the metal inserts 6, 16. One of the shells 3 is provided with a keyway 11 and the outer shell 14 is provided with a key 21 which is engageable in the keyway 11 to ensure correct and accurate alginment between the contacts of the two connector parts 2, 13 when said parts are coupled together.

Fig. 1

Bundesdruckerei Berlin

**Description**

HYBRID CONNECTOR

This invention relates to hybrid connectors and is particularly concerned with hybrid optical electrical connectors.

When it is required to connect a cable containing both optical fibres and electric wires, a hybrid connector is required with both LF and optical contacts. Previously proposed hybrid connectors have adapted a standard electrical connector and made an optical contact or insert to fit in the cavity normally used by the LF contact. Such an insert may comprise, for example, a perforated disc carrying either expanded beam inserts or ferrule inserts. However, in order to achieve a relatively low loss optical coupling between two fibre cores, alignment has to be within one tenth of the fibre core diameter which is usually of the order of 5 microns. The previously proposed hybrid connectors fabricated from a standard electrical connector have not needed the means for such accurate alignment.

The present invention therefore, aims to provide a hybrid connector in which accurate coupling alignment can readily take place.

According to the invention, there is provided a hybrid connector adapted to afford both electrical and non-electrical connections, said connector comprising first and second mutually engaged connector parts, wherein the improvement lies in that each of the connector parts comprises a respective annular housing within which a number of non-electrical contacts are disposed and a number of electrical contacts being arranged in the central region defined by the annular housing.

Preferably, the non-electrical connections are equi-angularly spaced apart in the annular housing.

The connector according to the invention has the advantage that a substantially standard electrical plug and socket connector can be accommodated within the annular housings which contain the non-electrical connectors. For example, the outer shell of a standard electrical connector can be utilised, the usual plastic and rubber insert being removed and replaced by an annular housing. The annular housings of the two connector parts simulate standard connector internal inserts although with a smaller shell size.

The annular housing of each connector part desirably comprises a metal.

Also according to the present invention there is provided a hybrid connector part adapted to afford both electrical and non-electrical contacts, wherein the improvement lies in that the connector part comprises an annular housing within which a number of non-electrical contacts are disposed and a number of electrical contacts being arranged in the central region defined by the annular housing.

The invention will now be further described, by way of example, with reference to the drawings, in which:-

Figure 1 is a plan view of one embodiment of a hybrid connector according to the invention; and

Figure 2 is a cross-section through the plane II-II shown in Figure 1.

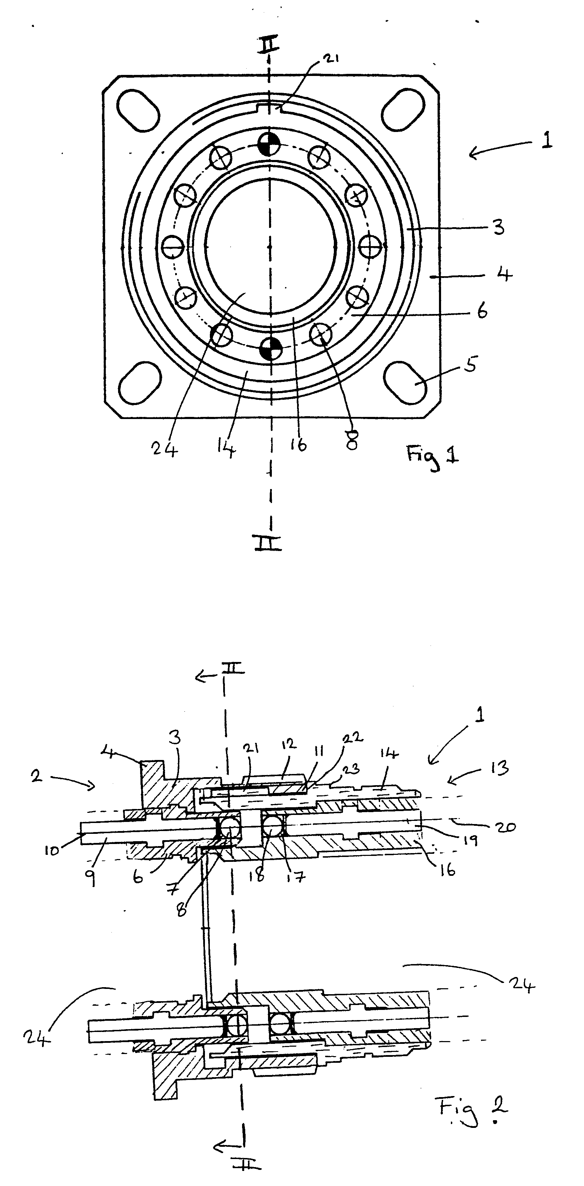

Referring to the drawings, the hybrid connector 1 according to the invention comprises a first connector part 2 in the form of an outer cylindrical shell 3 provided with a substantially square flange 4 having elongated bores or slots 5 at each of its corners for securing the connector 1 to a suitable mounting (not shown). The shell 3 contains a cylindrical metal insert 6 provided with a series of equi-angularly spaced bores 7 which are spaced at equal radii from the central longitudinal axis of the insert. A respective spherical lens 8 is force-fitted into each of the bores 7 in the insert 6, which bores 7 also receive respective ferrules 9 each of which is butted against a respective lens 8. Each ferrule 9 contains the end of a respective optical fibre 10. The shell 3 is further provided with a keyway 11 and an external screw-thread 12.

A second connector part of the hybrid connector 13 comprises an outer cylindrical shell 14 which contains a cylindrical metal insert 16. Like the insert 6, the insert 16 is also provided with a series of equi-angularly spaced bores 17 which are spaced at equal radii from the central longitudinal axis of the insert. A respective spherical lens 18 is force-fitted into each of the bores 17 in the insert 16 which bores likewise also receive ferrules 19 each of which is butted against a respective lens 18. Each ferrule 19 contains the end of a respective optical fibre 20.

The shell 3 is adapted to receive the shell 14 and, in order to ensure that the lenses 8 and 18 of the two connector parts are correctly aligned with one another, the shell 14 is provided with a key 21 which is engageable in the keyway 11 in the shell 3. The shell 14 is further provided with a shoulder 22 which is designed to butt against the end of the shell 3 and with at least one external shoulder 23. A sleeve (not shown) having an internal screw-thread is fitted over the shell 14 and its screw-thread is engageable with the screw-thread 12 of the shell 3, the sleeve having a flange (not shown) which is engageable with the shoulder(s) 23 on the shell 3 whereby screwing the sleeve onto the shell 3 is effective to hold the two connector parts together.

As shown in the drawings, each of the metal inserts 6 and 16 is provided with a large central bore 24 each of which is adapted to receive a respective electrical moulding and contacts (not shown) which are designed to be connected together when the two shells are coupled to each other. Electric lines (not shown) leading to the contacts and the optical fibres of each connector part are desirably incorporated into a single electrical/optical cable (not shown).

By means of the hybrid connector according to the invention, it is possible to achieve accurate alignment of the optical fibres 10, 20 and thus obtain a low-loss coupling of the fibres. The lenses 8, 18 desirably comprise sapphire lenses in view of their scratch resistance.

Although the invention is directed previously to optical/electrical hybrid connectors, it should be noted that the invention is not limited to such connectors but is equally applicable to other hybrid connectors. For example, hydraulic or pneumatic contacts may be fitted in the metal inserts 6 and 16 instead of optical fibres.

**Claims**

1. A hybrid connector 1 adapted to afford both electrical and non-electrical connections, said connector 1 comprising first and second mutually engagable connector parts 2, 13, characterised in that each of the connector parts 2, 13 comprises a respective annular housing 6, 16 within which a number of non-electrical contacts 10, 20 are disposed and a number of electrical contacts being arranged in the central region 24 defined by the annular housing 6, 16.

2. A hybrid connector 1 according to Claim 1, characterised in that the non-electrical contacts 10, 20 are equi-angularly spaced apart in the annular housing 6, 16.

3. A hybrid connector 1 according to Claim 1 or Claim 2, characterised in that the annular housing 6, 16 of each connector part 2, 13 comprises metal.

4. A hybrid connector 1 according to any one of the preceding claims, characterised in that the non-electrical connections 10, 20 comprise optical connections.

5. A hybrid connector 1 according to any one of Claims 1 to 3, characterised in that the non-electrical connections comprise hydraulic or pneumatic connections.

6. A hybrid connector 1 according to Claim 4, characterised in that the optical connections are provided by a number of bores 7, 17 being arranged in the annular housing 6, 16 and a respective lens 8, 18 is force fit into each bore 7, 17 thereby forming expanded-beam contacts.

7. A hybrid connector 1 according to any preceding claim, characterised in that means are provided on the connector parts 2, 13 to ensure that, when said parts 2, 13 are coupled together, the non-electrical contacts 10, 20 are in correct and accurate alignment with one another.

8. A hybrid connector according to claim 6, characterised in that the alignment means comprise a keyway 11 in one connector part 2 which is adapted to receive a key 21 on the other connector part 13.

9. A hybrid connector part 2, 13 adapted to afford both electrical and non-electrical contacts 10, 20, characterised in that the connector part 3, 13 comprises an annular housing 6, 16 within which a number of non-electrical contacts 10, 20 are disposed and a number of electrical contacts being arranged in the central region 24 defined by the annular housing 6, 16.

0256892

Fig 1

Fig 2